# EUROPEAN PATENT APPLICATION

(11) **EP 3 723 028 A1**
(43) Date of publication of application: **14.10.2020**
(21) Application number: 18887128.9
(22) Date of filing: 28.09.2018
(51) Int. Cl.: G06Q 50/10, G06F 16/9536

(54) **INFORMATION PROCESSING DEVICE, INFORMATION PROCESSING METHOD, AND PROGRAM**

(30) Priority: 04.12.2017 JP 2017232512
(71) Applicant: Sony Corporation, Tokyo 108-0075 (JP)
(72) Inventor: IKENAGA, Yoshihiko, Tokyo 141-0031 (JP); LAWRENSON, Matthew, Lausanne 1015 (CH); WRIGHT, Christopher, London SE19 3HF (GB); VAN DEN BERG, Jan Jasper, Lausanne 1015 (CH)
(74) Representative: MFG Patentanwälte Meyer-Wildhagen Meggle-Freund Gerhard PartG mbB
(86) International application number: PCT/JP2018/036570
(87) International publication number: WO 2019/111510

(57) **Abstract**

It is possible to more appropriately evaluate arbitrary information in order to achieve an arbitrary purpose (including a purpose of learning).

There is provided an information processing apparatus including: an acquiring unit that acquires information regarding usefulness that other users similar to a user have felt for arbitrary information with respect to any one of information regarding an arbitrary purpose mainly for the user or history information of the user, registered in a P2P database; and a control unit that performs evaluation of the arbitrary information on the basis of the information regarding the usefulness.

## Description

### TECHNICAL FIELD

The present disclosure relates to an information processing apparatus, an information processing method, and a program.

### BACKGROUND ART

In recent years, a service that uses a peer-to-peer database including blockchain data disclosed in Non-Patent Document 1 has been actively developed. Examples of such a service can include Bitcoin of Non-Patent Document 2, and the like, which uses blockchain data for exchange of a virtual currency. In the service that uses the peer-to-peer database including the blockchain data, it is possible to prevent tampering and the like of data managed in the peer-to-peer database to secure authenticity of the data.

Now, here, with the advancement of technology in recent years, online learning has progressed. The online learning has been provided by various institutions and organizations, and has covered a wide range of topics and fields. Therefore, a user can realize continuing professional development (CPD) in various fields.

Furthermore, from another viewpoint, digitization of information has progressed. For example, digitized information regarding a research result such as a paper or the like has continuously increased.

### CITATION LIST

### NON-PATENT DOCUMENT

Non-Patent Document 1: Melanie Swan, "Blockchain", (U.S.), O'Reilly Media, January 22, 2015
Non-Patent Document 2: Andreas M. Antonopoulos, "Mastering Bitcoin", (U.S.), O'Reilly Media, December 1, 2014

### SUMMARY OF THE INVENTION

### PROBLEMS TO BE SOLVED BY THE INVENTION

When an amount of digitized information increases, it becomes more difficult for a user to evaluate to what extent the digitized information is suitable for the online learning. Therefore, the user gives up searching for the most suitable information among a lot of digitized information and performs learning using information that is more easily accessible, and thus, there is a possibility that efficiency of the online learning will be reduced.

Therefore, the present disclosure has been made in view of the problems described above, and an object of the present disclosure is to provide a new and improved information processing apparatus, information processing method, and program capable of more appropriately evaluating arbitrary information in order to achieve an arbitrary purpose (including a purpose of learning).

### SOLUTIONS TO PROBLEMS

According to the present disclosure, there is provided an information processing apparatus including: an acquiring unit that acquires information regarding usefulness that other users similar to a user have felt for arbitrary information with respect to any one of information regarding an arbitrary purpose mainly for the user or history information of the user, registered in a P2P database; and a control unit that performs evaluation of the arbitrary information on the basis of the information regarding the usefulness.

Furthermore, according to the present disclosure, there is provided an information processing method executed by a computer, including: acquiring information regarding usefulness that other users similar to a user have felt for arbitrary information with respect to any one of information regarding an arbitrary purpose mainly for the user or history information of the user, registered in a P2P database; and performing evaluation of the arbitrary information on the basis of the information regarding the usefulness.

Furthermore, according to the present disclosure, there is provided a program for causing a computer to realize: acquiring information regarding usefulness that other users similar to a user have felt for arbitrary information with respect to any one of information regarding an arbitrary purpose mainly for the user or history information of the user, registered in a P2P database; and performing evaluation of the arbitrary information on the basis of the information regarding the usefulness.

### EFFECTS OF THE INVENTION

As described above, according to the present disclosure, it is possible to more appropriately evaluate arbitrary information in order to achieve an arbitrary purpose (including a purpose of learning).

Note that the effect described above is not necessarily restrictive, and any effect set forth in the present specification or other effects that can be grasped from the present specification may be accomplished together with or instead of the effect described above.

### BRIEF DESCRIPTION OF DRAWINGS

Fig. 1 is a diagram illustrating an overview of blockchain data, which is a kind of peer-to-peer database.
Fig. 2 is a diagram illustrating an overview of blockchain data, which is a kind of peer-to-peer database.
Fig. 3 is a diagram illustrating an overview of blockchain data, which is a kind of peer-to-peer database.
Fig. 4 is a diagram showing a configuration example of an information processing system according to the present embodiment.
Fig. 5 is a block diagram showing a functional configuration example of a usefulness judging apparatus 100 according to the present embodiment.
Fig. 6 is a block diagram showing a functional configuration example of a node apparatus 200 according to the present embodiment.
Fig. 7 is a block diagram showing a functional configuration example of a user apparatus 300 according to the present embodiment.
Fig. 8 is a sequence diagram showing an example of a flow of processing of performing output on the basis of usefulness of a web page.
Fig. 9 is a block diagram showing an example of a hardware configuration of an information processing apparatus 900 that implements the usefulness judging apparatus 100, the node apparatus 200, or the user apparatus 300 according to the present embodiment.

### MODE FOR CARRYING OUT THE INVENTION

Hereinafter, preferred embodiments of the present disclosure will be described in detail with reference to the accompanying drawings. Note that, in the present specification and the drawings, components having substantially the same functional configuration will be denoted by the same reference numerals and an overlapping description will be omitted.

Note that a description will be given in the following order.
1. Overview of peer-to-peer database
2. Embodiment
   2.1. Overview
   2.2. System configuration example
   2.3. Functional configuration example of usefulness judging apparatus 100
   2.4. Functional configuration example of node apparatus 200
   2.5. Functional configuration example of user apparatus 300
   2.6. Flow of processing
3. Modification
   3.1. Increase processing of the number of records of comparison cohort
   3.2. Judgment processing of usefulness considering recommended web page
   3.3. Registration processing of information registered in indexed database in P2P database
   3.4. Judgment processing of usefulness by P2P database program
   3.5. Application to system other than learning system
4. Hardware configuration example
5. Summary

### <1. Overview of peer-to-peer database>

Before describing an embodiment of the present disclosure, an overview of a peer-to-peer database will be first described.

In an information processing system according to the present embodiment, a distributed peer-to-peer database distributed in a peer-to-peer network is used. Note that the peer-to-peer network may be called a peer-to-peer distributed file system. Hereinafter, the peer-to-peer network may be referred to as a "P2P network", and the peer-to-peer database may be referred to as a "P2P database". As an example of the P2P database, blockchain data distributed in the P2P network may be used. Therefore, first, an overview of a blockchain system will be described as an example.

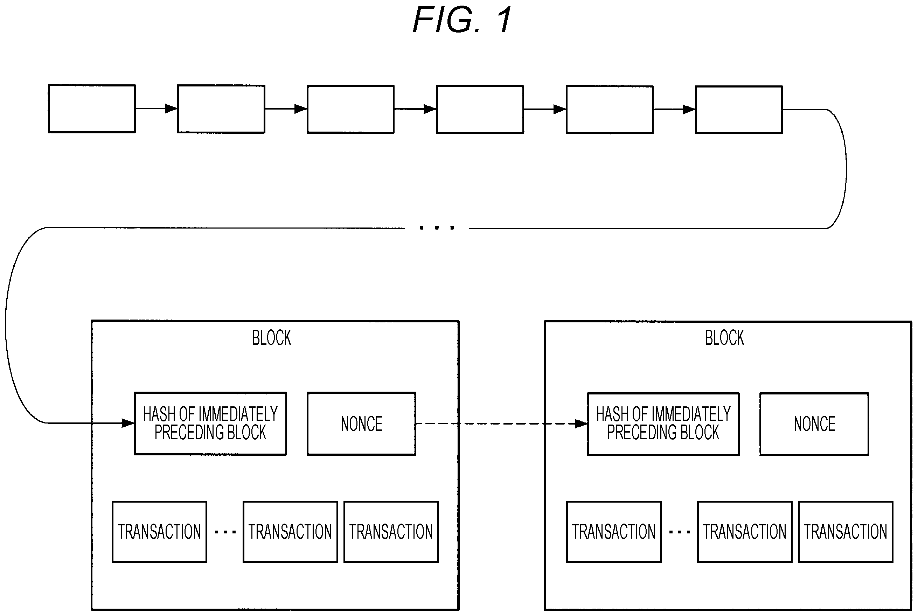

As shown in Fig. 1, blockchain data is data including a plurality of blocks connected to each other as if the plurality of blocks was a chain. In each block, one or two or more target data can be stored as a transaction.

Examples of the blockchain data can include blockchain data used for exchange of data of a virtual currency such as Bitcoin and the like. The blockchain data used for exchange of the data of the virtual currency includes, for example, a hash of the immediately preceding block and a value called nonce. The hash of the immediately preceding block is information used to judge whether or not a block is a "correct block" that is correctly connected to the immediately preceding block. The nonce is information used in order to prevent spoofing in authentication using the hash, and tampering is prevented by using the nonce. Examples of the nonce can include a character string, a numeric string, data indicating a combination of the character string and the numeric string, or the like.

Furthermore, in the blockchain data, an electronic signature using an encryption key is given to data of each transaction to prevent spoofing. Furthermore, the data of each transaction is disclosed and shared throughout the P2P network. Note that the data of each transaction may be encrypted using the encryption key.

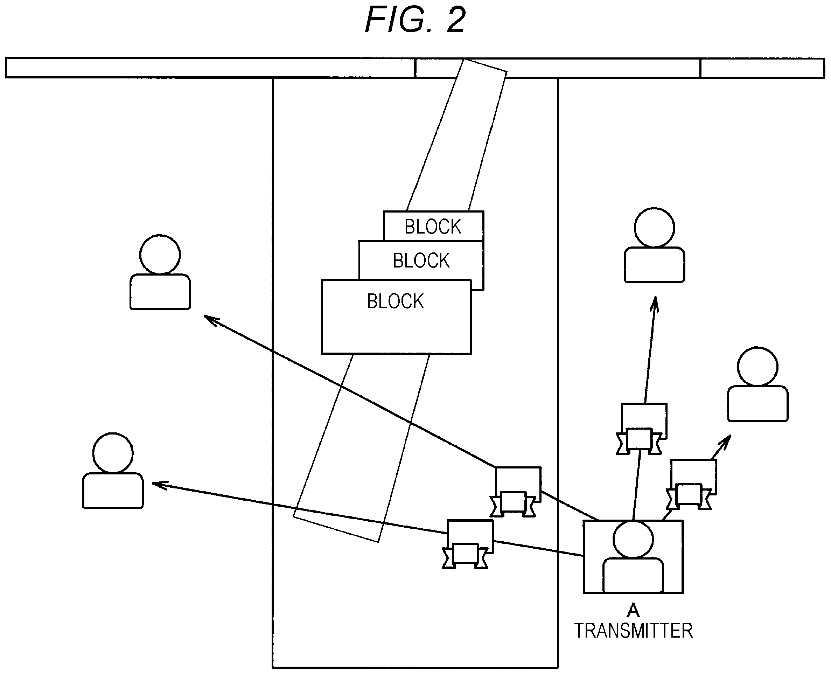

Fig. 2 is a diagram showing a state in which target data is registered by user A in the blockchain system. User A electronically signs the target data to be registered in the blockchain data using private key of user A. Then, user A broadcasts a transaction including the electronically signed target data on the P2P network. Therefore, it is secured that an owner of the target data is user A.

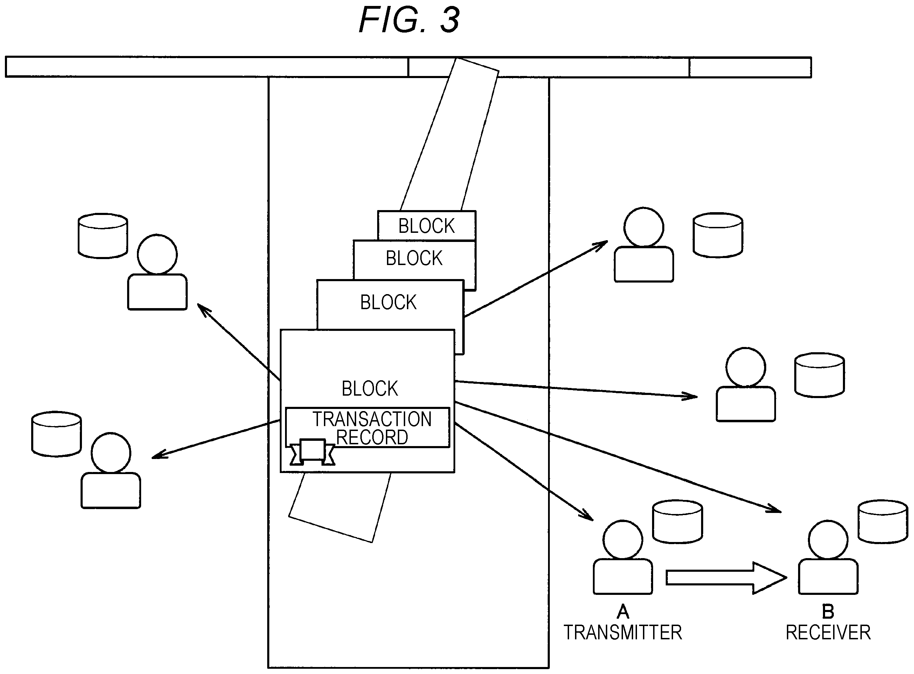

Fig. 3 is a diagram showing a state in which the target data is transferred from user A to user B in the blockchain system. User A performs an electronic signature using the private key of user A in the transaction, and includes a public key of user B in the transaction. Therefore, it is indicated that the target data has been transferred from user A to user B.

Furthermore, in the blockchain system, for example, by using sidechain technology, it is possible to include other target data different from a virtual currency in blockchain data used for exchange of data of an existing virtual currency, such as blockchain data of Bitcoin, and the like.

### <2. Embodiment>

The overview of the peer-to-peer database has been described hereinabove. Next, an embodiment of the present disclosure will be described.

### (2.1. Overview)

First, an overview of the present disclosure will be described.

As described above, with the advancement of technology in recent years, online learning has progressed. The online learning has been provided by various institutions and organizations, and has covered a wide range of topics and fields. For example, many famous universities including Massachusetts Institute of Technology, Harvard University, and Oxford University have provided a massive open online course (MOOC) that can perform the online learning regarding to various topics for free or at a low price. A user can improve his/her ability by selecting a desired learning course and performing online learning in the MOOC. Therefore, a user can realize continuing professional development (CPD) in various fields.

Furthermore, with the progress of online learning, various learning methods have also been born. One example of those learning methods is path learning (also called learning paths and pathway learning). The path learning is a learning method in which a user performs learning according to an educational path selected by him/her in order to acquire arbitrary skill or knowledge. In the path learning, the user is required to have skill of selecting an appropriate educational path and information (teaching material) used for appropriate learning.

Furthermore, from another viewpoint, as described above, digitization of information has progressed. For example, in 2014, Google Scholar, which is primarily aimed at a search in an academic application, has been said to have been able to search for about 160 million digitized documents, and web of science (WOS), which is an online academic database, has been said to have managed about 90 million digitized documents. Moreover, since the number of researches conducted all over the world is expected to double every nine years in the future, digitized information (for example, papers and the like) regarding research results tends to continuously increase in the future.

When an amount of digitized information increases, it becomes more difficult for a user to evaluate to what extent the digitized information is suitable for the online learning. Therefore, the user gives up searching for the most suitable information among a lot of digitized information and performs learning using information that is more easily accessible, and thus, there is a possibility that learning efficiency will be reduced.

Therefore, the present disclosers have invented the present disclosure in view of the circumstance described above. An information processing system according to the present disclosure acquires information regarding usefulness that other users similar to a user have felt for arbitrary information with respect to any one of information regarding an arbitrary purpose mainly for the user (including information regarding a purpose of learning) or history information of the user, registered in a P2P database, and evaluates the arbitrary information on the basis of the information regarding the usefulness.

Therefore, in a case where the present disclosure is applied to a learning system, the information processing system (learning system) according to the present disclosure can shorten a time required for the user to search for information useful for learning, and can thus improve learning efficiency. Furthermore, the information processing system according to the present disclosure can prevent the evaluation of the usefulness from being illegally operated by using the information registered in the P2P database for processing.

Note that the present disclosure may be applied to any system other than the learning system. In the present specification, a case where the present disclosure is applied to a learning system will first be described as an embodiment, and a case where the present disclosure is applied to another system will then be described as a modification.

### (2.2. System configuration example)

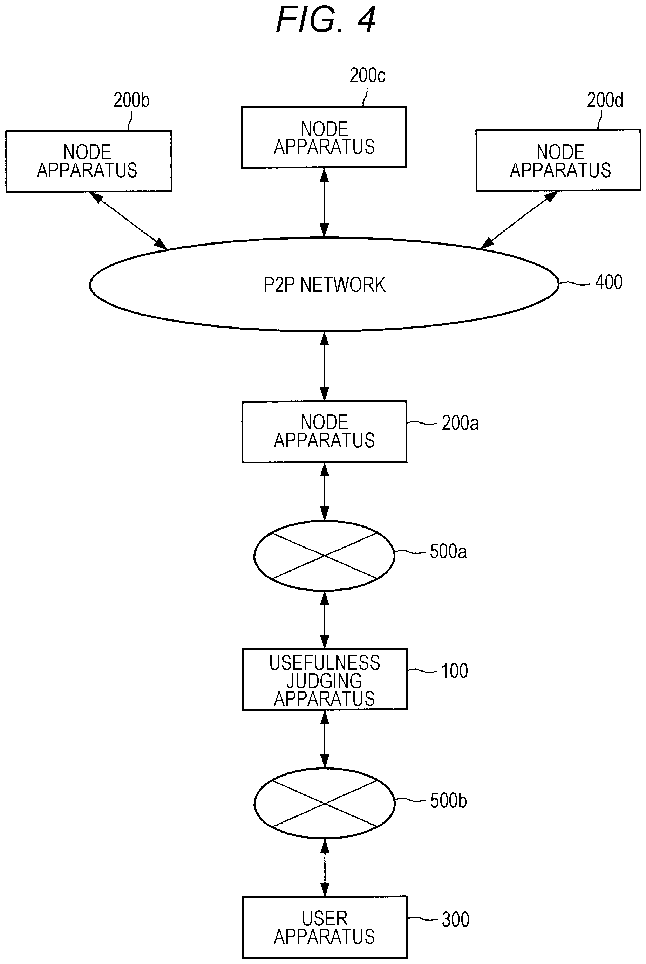

The overview of the present disclosure has been described hereinabove. Next, a configuration example of an information processing system (learning system) according to an embodiment of the present disclosure will be described with reference to Fig. 4.

As shown in Fig. 4, the information processing system according to the present embodiment includes a usefulness judging apparatus 100, a plurality of node apparatuses 200 (node apparatuses 200a to 200d in Fig. 4), and a user apparatus 300. Furthermore, the plurality of node apparatuses 200 is each connected to a P2P network 400. Moreover, the usefulness judging apparatus 100 and the node apparatus 200a are connected to each other by a network 500a, and the usefulness judging apparatus 100 and the user apparatus 300 are connected to each other by a network 500b. Note that a configuration of the information processing system according to the present embodiment is not limited to a configuration of Fig. 4. For example, the number of apparatuses constituting the information processing system may be changed as appropriate. Furthermore, the usefulness judging apparatus 100 may be connected to the node apparatus 200 other than the node apparatus 200a.

### (Usefulness judging apparatus 100)

The usefulness judging apparatus 100 is an information processing apparatus that judges usefulness of arbitrary information. Describing an outline of processing, in a case where a user searches for arbitrary information (for example, web pages or the like) used for learning using the user apparatus 300, the usefulness judging apparatus 100 acquires keywords used for the search (hereinafter, also referred to as "search keywords"), an ID that can identify the user (hereinafter also referred to as a "learning user ID"), and one or two or more URLs indicating search results (hereinafter also referred to as "original URLs"), from the user apparatus 300.

Furthermore, in a case where the user browses a plurality of web pages one after another using links included in the web pages, such as Internet surfing or the like, using the user apparatus 300, the usefulness judging apparatus 100 may acquire arbitrary information (for example, words, descriptions, or the like in the web pages (hereinafter, referred to as "web page information")) included in the browsed web pages instead of the search keywords. Note that, in this case, it is assumed that the original URLs are one or two or more link information (for example, hyperlink information or the like) included in the web pages browsed by the user, but are not limited thereto.

Here, in the present specification, a case where information, which is a judgment target of the usefulness, is a web page (or a URL, link information, or the like corresponding to the web page) will be mainly described, but the information, which is the judgment target of the usefulness may be arbitrary information other than the web page. For example, the information, which is the judgment target of the usefulness, may be arbitrary document data, image data, moving image data, or the like.

Then, the usefulness judging apparatus 100 acquires information regarding a purpose of learning by the user (hereinafter, also referred to as "purpose information") using the search keyword (or the web page information). More specifically, learning history information of a plurality of users is registered in a P2P database provided in the node apparatus 200, and topics (or themes or the like) corresponding to learning purposes, keywords regarding the topics, and the like, are included in the learning history information. Therefore, the usefulness judging apparatus 100 can acquire the purpose information regarding the search keyword (or the web page information) by making an inquiry to the P2P database using the search keyword (or the web page information). In other words, the usefulness judging apparatus 100 can grasp the learning purpose by making an inquiry to the P2P database using the search keyword (or the web page information).

Note that history information other than the learning history information may be registered in the P2P database. For example, job history information, behavior history information, purchase history information, and the like, may be registered in the P2P database. Therefore, the usefulness judging apparatus 100 can grasp an arbitrary purpose for the user to perform a search by making an inquiry to the P2P database using the search keyword (or the web page information).

Moreover, the usefulness judging apparatus 100 acquires information regarding other users similar to the user (hereinafter, also referred to as "similar user information") from the P2P database. As described above, history information of the plurality of users including the learning history information is registered in the P2P database provided in the node apparatus 200. Therefore, the usefulness judging apparatus 100 can acquire similar user information regarding other users having history information similar to the history information of the user by making an inquiry to the P2P database using the learning user ID. For example, the usefulness judging apparatus 100 can acquire similar user information regarding other users having an educational background similar to that of the user. Note that the usefulness judging apparatus 100 may acquire the similar user information using information other than the history information. For example, the usefulness judging apparatus 100 may acquire similar user information regarding other users who have (or had) a learning purpose that is the same as or similar to the learning purpose of the user by making an inquiry to the P2P database using the purpose information described above.

Here, the usefulness judging apparatus 100 includes a database (hereinafter, "indexed database") in which user information (for example, attribute information such as ages, genders, names, or the like) regarding the users registered in the P2P database, URLs of web pages browed by each user, purpose information when each web page is browed, and information indicating a history of arbitrary exchange between each user and the web pages (hereinafter, "interaction history information") are registered.

The interaction history information can be, for example, the total browsing time of the web page by each user, processing performed in the web page by each user (for example, copying, pasting, printing, or sharing of information included in the web page, performance of "Like!" on Facebook (registered trademark), performance of "+1" on Google+ (registered trademark), performance of "retweet" on Twitter (registered trademark), performance of "good/bad evaluation", performance of "useful/not useful", or performance of "5-level evaluation" on the information, contribution of a comment to the information, registration of the information in a "bookmark", or the like), processing performed on each user by the web page (for example, providing arbitrary information to the users, ranking the users (for example, ranking the users on the basis of the number of times of sharing, or the like), or the like), or the like. Note that the interaction history information is not limited to those described above, and may be any information as long as it indicates the history of the exchange between each user and the web pages.

The interaction history information can indicate usefulness that each user has felt for the web page or the like. For example, as the total browsing time of the web page by the user becomes long, there is a possibility that the user will decide that the web page is more useful to browse the web page for a long period of time. Furthermore, in a case where the copying or the like of the information included in the web page is performed, it is considered that the user has decided that the web page is more useful than a case where the web page is simply browsed. Therefore, the interaction history information is used for judgment processing of usefulness of the subsequent stage.

Then, the usefulness judging apparatus 100 acquires an information group (hereinafter, referred to as a "comparison cohort") including interaction history information when a user similar to the user performing the learning has browsed the original URLs for a purpose that is the same as or similar to that of the user performing the learning by making an inquiry the indexed database using the purpose information, the similar user information, and the original URLs acquired in the processing described above. It is assumed that the comparison cohort includes user information (including the similar user information) regarding a user similar to the user performing the learning, URLs of web pages browsed by the user, purpose information when each web page has been browsed, and interaction history information, but is not limited thereto.

Note that the usefulness judging apparatus 100 may not use all of the purpose information, the similar user information, and the original URLs at the time of acquiring the comparison cohort. For example, the usefulness judging apparatus 100 may acquire the comparison cohort using only the URLs. In this case, since information regarding a user who is not similar to the user performing the learning and interaction history information at the time of browsing the original URLs for a purpose that is different from (is not similar to) that of the user performing the learning are included in the comparison cohort, the usefulness judging apparatus 100 may perform deletion or the like of unnecessary information after acquiring the comparison cohort. Furthermore, in a case where the purpose information is used to acquire the similar user information from the P2P database described above, since information of only other users who have (or had) the learning purpose that is the same as or similar to that of the user performing the learning is included (in other words, information of only other users similar to the user performing the learning on the purpose information is included) in the acquired similar user information, filtering using the purpose information may not be performed again at the time of acquiring the comparison cohort.

After acquiring the comparison cohort, the usefulness judging apparatus 100 judges the usefulness of the original URLs (or web pages corresponding to the original URLs) on the basis of the comparison cohort and the purpose information. More specifically, the usefulness judging apparatus 100 calculates index values of the usefulness of the original URLs (or the web pages corresponding to the original URLs) by performing predetermined calculation after performing predetermined weighting on the basis of the acquired comparison cohort and the purpose information. A specific example of a method of calculating the index values of the usefulness will be described later.

Then, the usefulness judging apparatus 100 controls provision of the URLs to the user apparatus 300 on the basis of the calculated index values of the usefulness. For example, the usefulness judging apparatus 100 may associate the index values of the usefulness with the URLs and provide these pieces of information to the user apparatus 300. Finally, the user apparatus 300 controls output of the URLs on the basis of the index values of the usefulness.

Through the series of processing described above, the usefulness judging apparatus 100 can more appropriately evaluate the original URLs (or the web pages corresponding to the original URLs) in order to achieve the learning purpose. More specifically, the usefulness judging apparatus 100 can judge the usefulness of the original URLs on the basis of a level close to a level (a level of a quantity and a quality of knowledge, an arbitrary skill level or the like) of the user performing the learning by using similar user information regarding other users having history information similar to history information of the user performing the learning. Furthermore, the usefulness judging apparatus 100 can judge the usefulness of the original URLs on the basis of learning purpose that is the same as or similar to that of the user by using the purpose information. Then, the usefulness judging apparatus 100 can shorten a time required for the user to search for information useful for the learning by controlling the provision of the URLs on the basis of a judgment result, and can thus improve learning efficiency.

Furthermore, the usefulness judging apparatus 100 can register new history information (for example, learning history information, job history information, behavior history information, purchase history information, or the like) in the P2P database by providing the new history information to the node apparatus 200. For example, the usefulness judging apparatus 100 can register the history information regarding behavior of the user in the web page in the P2P database by providing the history information to the node apparatus 200.

Note that a kind of the usefulness judging apparatus 100 is not particularly limited. For example, the usefulness judging apparatus 100 may be an arbitrary apparatus such as a general-purpose computer, a personal computer (PC), a tablet PC, and the like.

### (Node apparatus 200)

The node apparatus 200 is an information processing apparatus that is connected to the P2P network 400 and holds the P2P database. As described above, various history information of the user is registered in the P2P database. The history information includes, for example, learning history information such as a learning achievement record (for example, a record regarding an examination result, an acquired credit, an acquired qualification, or the like) of the user, an activity record (for example, a record regarding a club activity, a student council activity, an attendance situation, or the like) of the user, and the like, registered by each educational institution (for example, a nursery school, a kindergarten, an elementary school, a junior high school, a high school, a university, a graduate school, a cram school, a preparatory school, a qualification school, or the like). Furthermore, the history information includes job history information (for example, an industry name, a company name, a job content, a job start date, a job end date, an official position, or the like), behavior history information (for example, a behavior content, a behavior date and time, a behavior place, a behavior frequency, or the like) (event information is also included in the behavior history information), or purchase history information (for example, an article name, an amount of money, a purchase date, or the like). Note that the information registered in the P2P database is not limited to those described above. These pieces of information are registered in the P2P database to secure authenticity.

Then, the node apparatus 200 performs acquisition of information from the P2P database and registration of information in the P2P database. With respect to the acquisition of the information, the node apparatus 200 acquires the purpose information and the similar user information from the P2P database on the basis of the search keyword (or the web page information) and the learning user ID provided from the usefulness judging apparatus 100 at the time of judging the usefulness of the web page, and provides the purpose information and the similar user information to the usefulness judging apparatus 100. Note that a case where the node apparatus 200 acquires the information from the P2P database is not limited to those described above.

With respect to the registration of the information, in a case where the new history information (for example, the learning history information (including browsing history information of the web page), the job history information, the behavior history information, the purchase history information, or the like) of the user is provided from the usefulness judging apparatus 100, the node apparatus 200 registers these pieces of history information in the P2P database. Note that a case where the node apparatus 200 registers the information in the P2P database is not limited to those described above.

Note that the node apparatus 200 basically uses a predetermined program (hereinafter, referred to as a "P2P database program") provided in the P2P database and executed on the P2P database, in a case where the node apparatus 200 acquires the information from the P2P database, in a case where the node apparatus 200 registers the information in the P2P database, and the like. By using the P2P database program, for example, various types of processing other than a transaction of a virtual currency such as Bitcoin and the like is realized according to a predetermined rule. By providing the P2P database program in the P2P database, a risk that the P2P database program will be illegally altered is reduced.

The P2P database program is a chain code in Hyperledger, but is not limited thereto. For example, the P2P database program may refer to a smart contract. Note that the node apparatus 200 may realize the acquisition of the information from the P2P database and the registration of the information in the P2P database, using a program other than the P2P database program as appropriate. Furthermore, similarly to the usefulness judging apparatus 100, a kind of the node apparatus 200 is not particularly limited.

Furthermore, an example in which the plurality of node apparatuses 200 has the same function has been described in the present embodiment, but each node apparatus 200 may have different functions. For example, a node apparatus 200 (for example, an endorsing peer and the like) endorsing the registration of the information in the P2P database, a node apparatus 200 (for example, an ordering peer and the like) ordering each node apparatus 200 to perform registration after the endorsement, and a node apparatus 200 (for example, a committing peer and the like) registering the information in the P2P database may be provided.

### (P2P network 400)

The P2P network 400 is a network in which the P2P database is distributed. As described above, by connecting each node apparatus 200 to the P2P network 400, it is possible to update the P2P database while maintaining consistency with the P2P database held by the other node apparatuses 200.

Note that a kind of the P2P network 400 is not particularly limited. For example, the P2P network 400 may be any one of a consortium type operated by a plurality of organizations, a private type operated by a single organization, or a public type that does not specifically limit participants.

Note that a communication manner, a kind of line, and the like, used for the P2P network 400 are not particularly limited. For example, the P2P network 400 may be realized by a dedicated line network such as an Internet protocol-virtual private network (IP-VPN) and the like. Furthermore, the P2P network 400 may be realized by a public line network such as the Internet, a telephone line network, a satellite communication network, and the like, various local area networks (LANs) including Ethernet (registered trademark), a wide area network (WAN), and the like. Moreover, the P2P network 400 may be realized by a wireless communication network such as Wi-Fi (registered trademark), Bluetooth (registered trademark), and the like.

### (User apparatus 300)

The user apparatus 300 is an information processing apparatus that a user uses for learning. More specifically, as a premise, a web browser having a plug-in module is installed in the user apparatus 300 (hereinafter, the plug-in module is referred to as a "browser plug-in"). Then, when the user inputs the search keyword in a predetermined input area of the web browser, the browser plug-in performs processing for acquiring the search keyword, the original URLs (one or two or more URLs included in the search result), and the learning user ID and providing these pieces of information to the usefulness judging apparatus 100. Furthermore, when the user browses a plurality of web pages one after another using the web browser (in other words, performs Internet surfing), the browser plug-in performs processing for acquiring web page information such as words, descriptions, or the like in the web pages, original URLs, and a learning user ID, and providing these pieces of information to the usefulness judging apparatus 100. In this case, the original URLs are one or two or more link information (for example, hyperlink information or the like) included in the web pages browsed by the user.

Then, after the judgment of the usefulness of the original URLs (or web pages corresponding to the original URLs), the browser plug-in acquires URLs with which index values of the usefulness are associated, from the usefulness judging apparatus 100, and controls output on the basis of the index values of the usefulness. For example, the browser plug-in may display the URLs side by side (in other words, in a ranking format) in descending order of the index values of the usefulness. Therefore, it becomes easy for the user to access a more useful web page. Note that a method of controlling the output is not limited to that described above. For example, the browser plug-in may control the output on the basis of control information designating the method of controlling the output by providing the control information to the user apparatus 300 together with the URLs by the usefulness judging apparatus 100. Furthermore, these processing may be realized by software other than the browser plug-in. For example, an operating system (OS) of the user apparatus 300 may realize these processing. Furthermore, similarly to the usefulness judging apparatus 100, a kind of the user apparatus 300 is not particularly limited.

Here, the learning performed using the user apparatus 300 may refer to learning using an arbitrary learning course that can be taken by application of the user to an arbitrary institution, or may refer to an act or the like of the user browsing arbitrary information (for example, a web page or the like) in order to obtain knowledge about something. In a case where the user takes the learning course, the user apparatus 300 realizes various functions regarding the learning course by installing software used for the learning course in the user apparatus 300.

### (Network 500)

A network 500 is a network that connects the node apparatus 200 and the usefulness judging apparatus 100 to each other and connects the usefulness judging apparatus 100 and the user apparatus 300 to each other. Note that, similarly to the P2P network 400, a communication manner, a kind of line, and the like, used for the network 500 are not particularly limited.

The configuration example of the information processing system according to the present embodiment has been described hereinabove. Note that the configuration described above with reference to Fig. 4 is only an example, and a configuration of the information processing system according to the present embodiment is not limited to such an example. For example, some of the functions of the usefulness judging apparatus 100 may be provided in the node apparatus 200 or the user apparatus 300. For example, software (for example, a WEB application and the like in which a predetermined application programming interface (API) is used) that provides some of the functions of the usefulness judging apparatus 100 may be executed on the node apparatus 200 or the user apparatus 300. Furthermore, some of the functions of the node apparatus 200 may be provided in the usefulness judging apparatus 100 or the user apparatus 300. In other words, the usefulness judging apparatus 100 or the user apparatus 300 may participate in the P2P network 400 to hold the P2P database. The configuration of the information processing system according to the present embodiment can be flexibly modified according to specifications and operations.

### (2.3. Functional configuration example of usefulness judging apparatus 100)

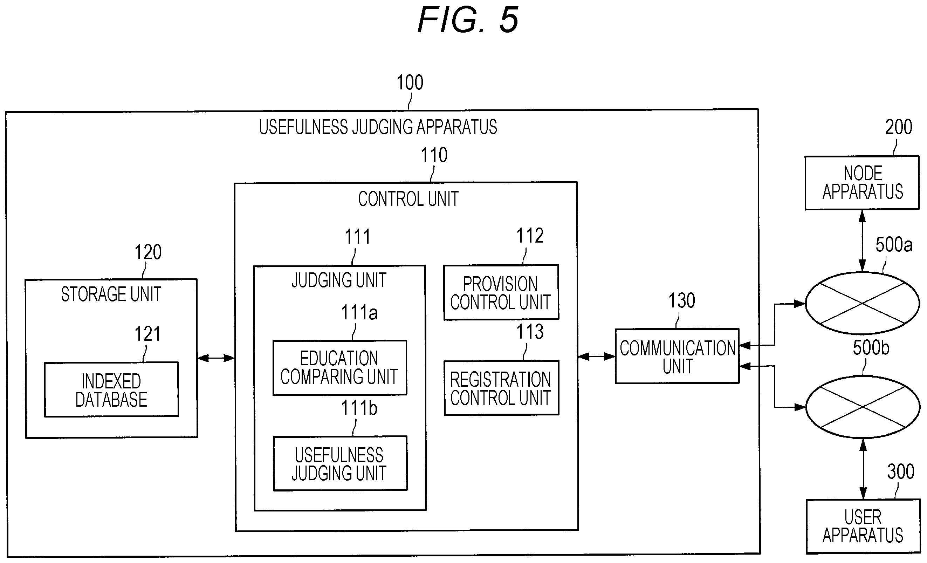

The configuration example of the information processing system according to the present embodiment has been described hereinabove. Next, a functional configuration example of the usefulness judging apparatus 100 will be described with reference to Fig. 5.

As shown in Fig. 5, the usefulness judging apparatus 100 includes a control unit 110, a storage unit 120, and a communication unit 130. Furthermore, the control unit 110 includes a judging unit 111, a provision control unit 112, and a registration control unit 113, and the judging unit 111 includes an education comparing unit 111a and a usefulness judging unit 111b. Furthermore, the storage unit 120 includes an indexed database 121.

### (Control unit 110)

The control unit 110 is a functional configuration that comprehensively controls general processing performed by the usefulness judging apparatus 100. For example, the control unit 110 can control start or stop of each configuration including an output unit (not shown) and the like such as a display, a speaker, or the like by generating a control signal. Note that a control content of the control unit 110 is not limited to that described above. For example, the control unit 110 may control processing generally performed in various servers, general-purpose computers, PCs, tablet PCs, and the like.

### (Judging unit 111)

The judging unit 111 is a functional configuration that includes the education comparing unit 111a and the usefulness judging unit 111b, as described above, and judges the usefulness of the original URLs (or the web pages corresponding to the original URLs) by using each of these functional configurations.

### (Education comparing unit 111a)

The education comparing unit 111a is a configuration that functions as an acquiring unit that acquires the purpose information, the similar user information, and the comparison cohort. Describing the acquisition of the purpose information and the similar user information more specifically, first, the education comparing unit 111a acquires the search keyword (or the web page information), the learning user ID, and the original URLs from the user apparatus 300. Then, the education comparing unit 111a acquires the purpose information and the similar user information by generating acquisition request information for requesting the acquisition of the purpose information and the similar user information from the P2P database and transmitting the acquisition request information to the node apparatus 200 together with the search keyword (or the web page information) and the learning user ID. Note that a method of acquiring the purpose information or the similar user information is not limited to that described above. For example, the purpose information may be directly designated by providing a pop-up or the like inquiring about the purpose information to the user.

Describing the acquisition of the comparison cohort more specifically, the education comparing unit 111a acquires the comparison cohort from the indexed database 121 using the purpose information, the similar user information, and the original URLs. Note that the education comparing unit 111a may not use all of the purpose information, the similar user information, and the original URLs at the time of acquiring the comparison cohort, as described above. The education comparing unit 111a provides the comparison cohort, the purpose information, and the original URLs to the usefulness judging unit 111b.

### (Usefulness judging unit 111b)

The usefulness judging unit 111b is a functional configuration that judges the usefulness of the original URLs (or the web pages corresponding to the original URLs) on the basis of the comparison cohort and the purpose information. More specifically, first, the usefulness judging unit 111b performs predetermined weighting on the basis of the acquired comparison cohort and purpose information.

More specifically, for example, the usefulness judging unit 111b performs the predetermined weighting on the basis of the interaction history information included in the comparison cohort. More specifically, the usefulness judging unit 111b performs the predetermined weighting on the basis of the total browsing time of the web page by each user, a content of processing performed in the web page by each user (for example, copying or the like of the information included in the web page), or a content of processing performed on each user by the web page (for example, ranking the users, or the like), included in the interaction history information. For example, as the total browsing time of the web page becomes long, it is considered that the user has decided that the web page is more useful, and the usefulness judging unit 111b thus performs higher weighting. Furthermore, in a case where the copying or the like of the information included in the web page is performed, it is considered that the user has decided that the web page is more useful than a case where the web page is simply browsed, and the usefulness judging unit 111b thus performs higher weighting. Note that a method of the weighting based on the interaction history information is not limited to those described above.

Furthermore, the usefulness judging unit 111b performs the predetermined weighting on the basis of the similar user information included in the comparison cohort. More specifically, the usefulness judging unit 111b performs the predetermined weighting on the basis of a similarity between each user included in the similar user information and the user who performs the learning. For example, as the similarity between each user included in the similar user information and the user who performs the learning becomes high, it is considered that the usefulness can be judged more appropriately, and the usefulness judging unit 111b thus performs higher weighting. Note that a method of the weighting based on the similar user information is not limited to that described above.

Furthermore, the usefulness judging unit 111b performs the predetermined weighting on the basis of a similarity between purpose information at the time of browsing each web page and purpose information regarding the user who performs the learning, included in the comparison cohort. For example, as the similarity between the purpose information at the time of browsing each web page and the purpose information regarding the user who performs, included in the comparison cohort the learning becomes high, it is considered that the usefulness can be judged more appropriately, and the usefulness judging unit 111b thus performs higher weighting. Note that a method of the weighting based on the purpose information is not limited to that described above.

Then, the usefulness judging unit 111b calculates the index values of the usefulness of the original URLs (or the web pages corresponding to the original URLs) by performing predetermined calculation after performing the weighting described above. Here, a content of the calculation is not particularly limited, and the usefulness judging unit 111b calculates the index values of the usefulness by performing some calculation using a result of the weighting described above. The usefulness judging unit 111b provides the calculated index values of the usefulness to the provision control unit 112.

### (Provision control unit 112)

The provision control unit 112 is a functional configuration that controls the provision of the URLs (or the web pages corresponding to the URLs) to the user. For example, the provision control unit 112 may associate the index values of the usefulness provided from the usefulness judging unit 111b with the URLs and provide these pieces of information to the user apparatus 300. Note that a method of controlling the provision of the URLs is not limited to that described above. For example, the provision control unit 112 may associate the index values of the usefulness with the URLs, and then provide only a URL whose index value of the usefulness is larger than a predetermined value to the user apparatus 300. Therefore, the user apparatus 300 may control the output of the URLs on the basis of the index values of the usefulness.

Furthermore, the provision control unit 112 may provide control information for designating a method of controlling the output of the URLs to the user apparatus 300 together with the URLs. For example, the provision control unit 112 may generate control information for causing the URLs to be displayed in a ranking format, causing display sizes or display colors of the URLs to be changed on the basis of the index values of the usefulness, or causing the index values of the usefulness to be displayed together with the URLs, and provide the control information to the user apparatus 300 together with the URLs. Therefore, the provision control unit 112 can freely control the output by the user apparatus 300. Note that a content of the control information is not limited to those described above. For example, the provision control unit 112 may generate control information for changing a content of a voice output on the basis of the index values of the usefulness and provide the control information to the user apparatus 300 together with the URLs.

### (Registration control unit 113)

The registration control unit 113 is a functional configuration that controls registration of various types of information in the P2P database or the storage unit 120. Describing the registration in the P2P database more specifically, the registration control unit 113 may control the registration of the new history information (for example, the learning history information, the job history information, the behavior history information, the purchase history information, or the like) in the P2P database at any time. For example, the registration control unit 113 generates registration request information for requesting the registration of the history information regarding the behavior of the user in the web page in the P2P database, and transmits the registration request information to the node apparatus 200. Therefore, the history information is registered in the P2P database.

Furthermore, describing the registration in the storage unit 120 more specifically, the registration control unit 113 may register the history information regarding the behavior of the user in the web page in the indexed database 121 provided in the storage unit 120 at any time. In other words, the registration control unit 113 may generate the interaction history information using the history information regarding the behavior of the user in the web page, and register the interaction history information in the indexed database 121. Note that the information registered by the registration control unit 113 is not limited to those described above.

### (Storage unit 120)

The storage unit 120 is a functional configuration that stores various types of information. For example, the storage unit 120 stores the search keyword (or the web page information) acquired from the user apparatus 300, the learning user ID or the original URLs, the purpose information or the similar user information acquired from the P2P database, the comparison cohort acquired from the indexed database 121, or the like. Furthermore, the storage unit 120 stores programs, parameters, or the like used by each functional configuration of the usefulness judging apparatus 100. Note that a content of the information stored in the storage unit 120 is not limited to those described above.

### (Indexed database 121)

The indexed database 121 is a database in which the user information (for example, attribute information such as ages, genders, names, or the like) regarding the users registered in the P2P database, the URLs of the web pages browed by each user, the purpose information when each web page is browed, the interaction history information are registered, as described above. By registering these pieces of information in the indexed database 121 whose processing speed is faster than that of the P2P database, even in a case where an amount of information increases, the registration and acquisition of the information is performed more smoothly. Note that the information registered in the indexed database 121 is not limited to those described above.

Furthermore, as described above, in a case where the user browses the web page using the user apparatus 300 or performs some processing in the web page (for example, copying or the like of information included in the web page), the indexed database 121 is updated by the registration control unit 113 at any time.

### (Communication unit 130)

The communication unit 130 is a functional configuration that controls various communications with the node apparatus 200 and the user apparatus 300. For example, in a case where the user searches for the web page used for learning or performs the Internet surfing using the user apparatus 300, the communication unit 130 receives the search keyword (or the web page information), the learning user ID, and the original URLs from the user apparatus 300. Thereafter, the communication unit 130 transmits the search keyword (or the web page information) and the learning user ID to the node apparatus 200, and receives the purpose information and the similar user information acquired from the P2P database on the basis of these pieces of information from the node apparatus 200. Then, after the usefulness of the original URLs is judged, the communication unit 130 transmits, for example, the URLs with which the index values of the usefulness are associated, to the user apparatus 300. Note that information transmitted and received by the communication unit 130 and a case where the communication unit 130 performs communication are not limited to those described above.

The functional configuration example of the usefulness judging apparatus 100 has been described hereinabove. Note that the functional configuration described above with reference to Fig. 5 is only an example, and the functional configuration of the usefulness judging apparatus 100 is not limited to such an example. For example, the usefulness judging apparatus 100 may not necessarily include all of the functional configurations shown in Fig. 5. Furthermore, the functional configuration of the usefulness judging apparatus 100 can be flexibly modified according to specifications or operations.

### (2.4. Functional configuration example of node apparatus 200)

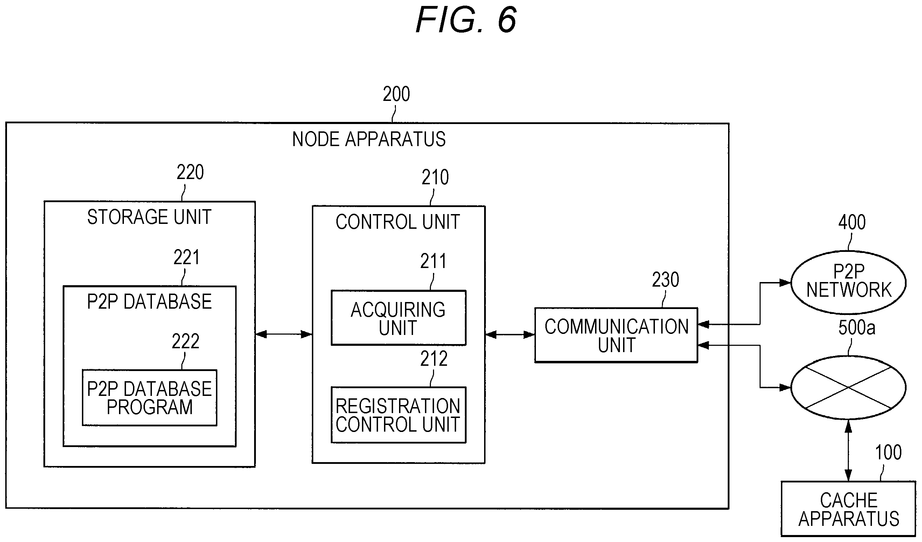

The functional configuration example of the usefulness judging apparatus 100 has been described hereinabove. Next, a functional configuration example of the node apparatus 200 will be described with reference to Fig. 6.

As shown in Fig. 6, the node apparatus 200 includes a control unit 210, a storage unit 220, and a communication unit 230. Furthermore, the control unit 210 includes an acquiring unit 211 and a registration control unit 212. Furthermore, the storage unit 220 includes a P2P database 221, and a P2P database program 222 is provided in the P2P database 221.

### (Control unit 210)

The control unit 210 is a functional configuration that comprehensively controls general processing performed by the node apparatus 200. For example, the control unit 210 can control start or stop of each configuration including an output unit (not shown) and the like such as a display, a speaker, or the like by generating a control signal. Note that a control content of the control unit 210 is not limited to those described above. For example, the control unit 210 may control processing generally performed in various servers, general-purpose computers, PCs, tablet PCs, and the like.

### (Acquiring unit 211)

The acquiring unit 211 is a functional configuration that acquires various types of information from the P2P database 221. For example, at the time of judging the usefulness of the original URL, the acquiring unit 211 acquire the purpose information and the similar user information with each other from the P2P database 221 on the basis of the search keyword (or the web page information) and the learning user ID provided from the usefulness judging apparatus 100. Note that the information that the acquiring unit 211 acquires from the P2P database 221 and a case where the acquiring unit 211 acquires the information from the P2P database 221 are not limited to that described above. The acquiring unit 211 provides the acquired information to the communication unit 230 to enable transmission of these pieces of information to the usefulness judging apparatus 100.

### (Registration control unit 212)

The registration control unit 212 is a functional configuration that controls registration of various types of information in the P2P database 221. For example, in a case where the new history information (for example, the learning history information (including the browsing history information of the web page), the job history information, the behavior history information, the purchase history information, or the like) of the user is provided from the usefulness judging apparatus 100, the registration control unit 212 registers these pieces of history information in the P2P database 221. Note that the information that the registration control unit 212 registers in the P2P database 221 and a case where the registration control unit 212 registers the information are not limited to those described above.

### (Storage unit 220)

The storage unit 220 is a functional configuration that stores various types of information. For example, the storage unit 220 stores programs, parameters, or the like used by each functional configuration of the node apparatus 200. Note that a content of the information stored in the storage unit 220 is not limited to those described above.

### (P2P database 221)

The P2P database 221 is a database that is commonly held by each node apparatus 200, and is, for example, blockchain data. As described above, various history information of a plurality of users are registered in the P2P database 221, and, for example, topics (or themes or the like) corresponding to learning purposes, keywords regarding the topics, and the like, are included in the learning history information. The various types of information registered in the P2P database 221 may be added with an electronic signature using an encryption key or may be encrypted using an encryption key. Note that the information registered in the P2P database 221 is not limited to those described above.

### (P2P database program 222)

The P2P database program 222 is a predetermined program that is provided in the P2P database 221 and is executed on the P2P database 221. By using the P2P database program 222, for example, various types of processing other than a transaction of a virtual currency such as Bitcoin and the like is realized while maintaining consistency according to a predetermined rule. Furthermore, by providing the P2P database program 222 in the P2P database 221, a risk that the P2P database program will be illegally altered is reduced. The P2P database program 222 is a chain code in Hyperledger, but is not limited thereto. For example, the P2P database program 222 may refer to a smart contract.

The P2P database program 222 can realize general processing performed on the P2P database 221. For example, the P2P database program 222 can realize acquisition processing of the various types of information, registration processing of the various types of information, and the like, performed by accessing the P2P database 221. Note that the processing realized by the P2P database program 222 is not limited to those described above. A development language of the P2P database program 222, the number of P2P database programs 222 provided in the P2P database 221, or the like, is not particularly limited.

### (Communication unit 230)

The communication unit 230 is a functional configuration that controls various communications with the usefulness judging apparatus 100 and the other node apparatuses 200. For example, at the time of judging the usefulness of the original URL, the communication unit 230 receives the search keyword (or the web page information) and the learning user ID from the usefulness judging apparatus 100, and transmits the purpose information and the similar user information acquired from the P2P database 221 on the basis of these pieces of information to the usefulness judging apparatus 100. Note that information transmitted and received by the communication unit 230 and a case where the communication unit 230 performs communication are not limited to those described above. For example, the communication unit 230 may receive the new history information (for example, the learning history information, the job history information, the behavior history information, the purchase history information, or the like) from the usefulness judging apparatus 100. Therefore, these pieces of history information are registered in the P2P database 221.

The functional configuration example of the node apparatus 200 has been described hereinabove. Note that the functional configuration described above with reference to Fig. 6 is only an example, and the functional configuration of the node apparatus 200 is not limited to such an example. For example, the node apparatus 200 may not necessarily include all of the function configurations shown in Fig. 6. Furthermore, the functional configuration of the node apparatus 200 can be flexibly modified according to specifications or operations.

### (2.5. Functional configuration example of user apparatus 300)

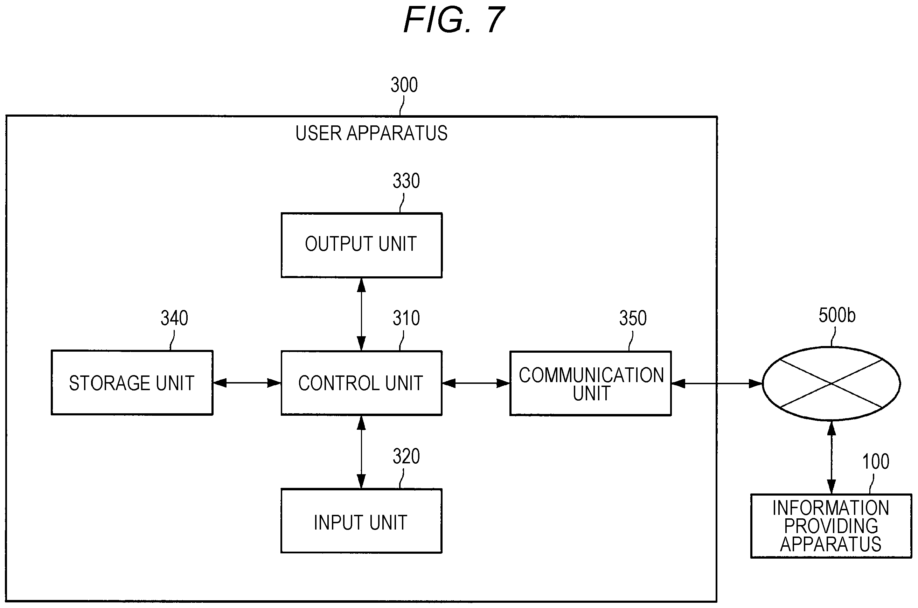

The functional configuration example of the node apparatus 200 has been described hereinabove. Next, a functional configuration example of the user apparatus 300 will be described with reference to Fig. 7.

As shown in Fig. 7, the user apparatus 300 includes a control unit 310, an input unit 320, an output unit 330, a storage unit 340, and a communication unit 350.

### (Control unit 310)

The control unit 310 is a functional configuration that comprehensively controls general processing performed by the user apparatus 300. For example, the control unit 310 can function as the browser plug-in, and when the user inputs the search keyword using the input unit 320, the control unit 310 controls processing for acquiring the search keyword, the original URLs (one or more URLs indicating the search results), and the learning user ID and providing these pieces of information to the usefulness judging apparatus 100. Furthermore, when the user browses the plurality of web pages one after another using the web browser (in other words, performs the Internet surfing), the control unit 310 controls processing for acquiring the web page information such as the words, the descriptions, or the like in the web pages, the original URLs (one or two or more link information (for example, hyperlink information or the like) included in the web pages browsed by the user), and the learning user ID, and providing these pieces of information to the usefulness judging apparatus 100. Note that extraction of the web page information can be realized by a known text analysis function provided in the browser plug-in.

Then, after the judgment of the usefulness of the original URLs, the control unit 310 controls the output by the output unit 330 using the URLs which are provided from the usefulness judging apparatus 100 and with which the index values of the usefulness are associated. For example, the control unit 310 may cause the URLs to be displayed in the ranking format, cause the display sizes or the display colors of the URLs to be changed on the basis of the index values of the usefulness, or cause the index values of the usefulness to be displayed together with the URLs. For example, in the case where the display sizes or the display colors of the URLs are changed on the basis of the index values of the usefulness, there is a case where the user can recognize a group of useful URLs, but cannot recognize a URL having the highest usefulness. Therefore, the control unit 310 may notify the user of the URL having the highest usefulness by displaying the URLs in the ranking format. Furthermore, in a case where the URLs are displayed in the ranking format, the user can recognize only relative usefulness among a plurality of URLs. Therefore, the control unit 310 may notify the user of absolute usefulness of each URL by displaying the index values of the usefulness together with the URLs. Note that a method of controlling the output is not limited to that described above. For example, in a case where control information for designating a method of controlling the output is provided together with the URLs from the usefulness judging apparatus 100, the control unit 310 may control the output by the output unit 330 using the control information.

Note that a control content of the control unit 310 is not limited to those described above. For example, the control unit 310 may control processing generally performed in various servers, general-purpose computers, PCs, tablet PCs, and the like.

### (Input unit 320)

The input unit 320 is a functional configuration that receives the input from the user. For example, the input unit 320 includes an input means such as a mouse, a keyboard, a touch panel, a button, a switch, a microphone, or the like, and the user can perform input of the search keyword, designation of a web page to be browsed, or the like, by using these input means. The input unit 320 provides an input content to the control unit 310. Note that the input means provided in the input unit 320 is not particularly limited.

### (Output unit 330)

The output unit 330 is a functional configuration that outputs various types of information. For example, the output unit 330 includes a display means such as a display or the like, a voice output means such as a speaker or the like, and displays the URLs (or the web pages corresponding to the URLs) on the display or the like or outputs the URLs (or the web pages corresponding to the URLs) as voice by the speaker or the like on the basis of control of the control unit 310. Note that the output means provided in the output unit 330 is not particularly limited.

### (Storage unit 340)

The storage unit 340 is a functional configuration that stores various types of information. For example, the storage unit 340 stores the search keyword (or the web page information), the learning user ID, the original URLs, the URLs which are provided from the usefulness judging apparatus 100 and with which the index values of the usefulness are associated, or the like, or stores programs, parameters, or the like used by each functional configuration of the user apparatus 300. Note that the information stored in the storage unit 340 is not limited to those described above.

### (Communication unit 350)

The communication unit 350 is a functional configuration that controls various communications with the usefulness judging apparatus 100. For example, in a case where the user searches for the web page used for learning or performs the Internet surfing using the user apparatus 300, the communication unit 350 transmits the search keyword (or the web page information), the learning user ID, and the original URLs to the usefulness judging apparatus 100. Then, after the usefulness of the original URLs is judged, the communication unit 350 receives, for example, the URLs with which the index values of the usefulness are associated, from the usefulness judging apparatus 100. Note that information transmitted and received by the communication unit 350 and a case where the communication unit 350 performs communication are not limited to those described above.

The functional configuration example of the user apparatus 300 has been described hereinabove. Note that the functional configuration described above with reference to Fig. 7 is only an example, and the functional configuration of the user apparatus 300 is not limited to such an example. For example, the user apparatus 300 may not necessarily include all of the functional configurations shown in Fig. 7. Furthermore, the functional configuration of the user apparatus 300 can be flexibly modified according to specifications or operations.

### (2.6. Flow of processing)

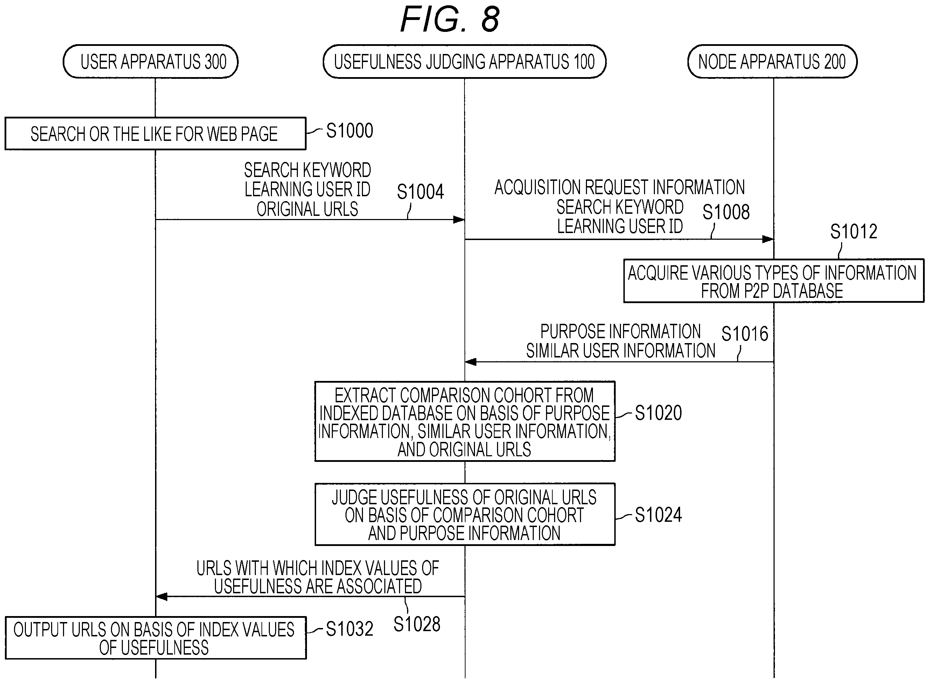

The functional configuration example of the user apparatus 300 has been described hereinabove. Next, a flow of processing by each apparatus will be described with reference to Fig. 8. Fig. 8 is a sequence diagram showing an example of a flow of processing of performing output on the basis of usefulness of the web page.

In step S1000, the user performing the learning searches for the web page used for the learning or browses the plurality of web pages one after another (in other words, performs the Internet surfing) by operating the input unit 320 of the user apparatus 300. In step S1004, the communication unit 350 transmits the search keyword (or the web page information), the learning user ID, and the original URLs to the usefulness judging apparatus 100. In step S1008, the education comparing unit 111a of the usefulness judging apparatus 100 generates the acquisition request information for requesting the acquisition of the purpose information and the similar user information from the P2P database 221, and the communication unit 130 transmits the acquisition request information to the node apparatus 200 together with the search keyword (or the web page information) and the learning user ID.

In step S1012, the acquiring unit 211 of the node apparatus 200 acquires the purpose information and the similar user information from the P2P database 221 on the basis of these pieces of information. In step S1016, the communication unit 230 transmits these pieces of information to the usefulness judging apparatus 100.

In step S1020, the education comparing unit 111a of the usefulness judging apparatus 100 extracts the comparison cohort from the indexed database 121 using the purpose information, the similar user information, and the original URLs. In step S1024, the usefulness judging unit 111b judges the usefulness of the original URLs on the basis of the comparison cohort and the purpose information. In step S1028, the provision control unit 112 associates the index values of the usefulness provided from the usefulness judging unit 111b with the URLs, and the communication unit 130 transmits these pieces of information to the user apparatus 300.

In step S1032, the control unit 310 (the browser plug-in) of the user apparatus 300 outputs the URLs on the basis of the index values of the usefulness, such that a series of processing ends.

Note that each step in the sequence diagram shown in Fig. 8 does not necessarily need to be processed in time series in the order described. In other words, each step in the sequence diagram may be processed in order different from the order described or may be processed in parallel.

### <3. Modification>

The flow of processing by each apparatus has been described hereinabove. Next, a modification of the present disclosure will be described.

### (3.1. Increase processing of the number of records of comparison cohort)

In the embodiment described above, there is a case where accuracy of the index value of the usefulness is lowered (or the index value of the usefulness cannot be calculated) because the number of records of the comparison cohort is small. For example, for a popular learning purpose (a topic, a theme or the like, which is a learning target), there are many web pages regarding the learning purpose and many users browse these web pages, and it is thus easy for the number of records of the comparison cohort to become large. Conversely, for a less popular learning purpose, it is easy for the number of records of the comparison cohort to become small.

Therefore, an education comparing unit 111a of a usefulness judging apparatus 100 according to a modification performs processing for increasing the number of records of the comparison cohort in a case where the number of records of the comparison cohort is smaller than a predetermined value. For example, the education comparing unit 111a generates a keyword similar to the search keyword, a keyword which is a paraphrase of the search keyword, or a keyword included in the search keyword by analyzing the search keyword provided from the user apparatus 300. For example, in a case where the search keyword is a "natural science", the education comparing unit 111a generates a keyword "physical science" similar to the "natural science", a keyword "science" which is a paraphrase of the "natural science", a keyword "physics" included in the "natural science", or the like. Then, the education comparing unit 111a acquires purpose information from the P2P database 221 using not only the search keyword but also these generated keywords. Therefore, the education comparing unit 111a can acquire more purpose information as compared with a case where the purpose information is acquired using only the search keyword, and can thus increase the number of records of the comparison cohort acquired using the purpose information. Note that it can be said that the similar goes for web page information as well as the search keyword.

Furthermore, the education comparing unit 111a may reduce an allowable similarity at the time of acquiring the similar user information from the P2P database 221 using the learning user ID provided from the user apparatus 300. For example, the education comparing unit 111a may reduce the allowable similarity by reducing the number of compared parameters in comparing learning history information and the like of the user performing the learning and other users. Therefore, the education comparing unit 111a can acquire a lot of similar user information, and can thus increase the number of records of the comparison cohort acquired using the similar user information.

Furthermore, the education comparing unit 111a searches for URLs of web pages similar to the web pages corresponding to the original URLs by analyzing the original URLs provided from the user apparatus 300. Then, the education comparing unit 111a can increase the number of records of the comparison cohort by acquiring the comparison cohort from the indexed database 121 using not only the original URLs but also the searched new URLs.

Through the processing described above, the usefulness judging apparatus 100 according to the modification can improve accuracy of the index value of the usefulness calculated using the comparison cohort by increasing the number of records of the comparison cohort. Note that a content of processing for increasing the number of records of the comparison cohort is not limited to those described above.

### (3.2. Judgment processing of usefulness considering recommended web page)

As described above, the education comparing unit 111a can grasp the learning purpose of the user by acquiring the purpose information from the P2P database 221 on the basis of the search keyword (or the web page information).

The education comparing unit 111a of the usefulness judging apparatus 100 according to the modification acquires information regarding other users who had a learning purpose that is the same as or similar to that of the user performing the learning by making an inquiry to the P2P database 221 using the acquired purpose information. Then, in a case where here is a user who has already achieved the learning purpose (hereinafter, referred to as a "purpose achievement user") among these users (for example, in a case where a test score of the user is higher than a predetermined value, in a case where a knowledge quantity of the user in the topic is higher than a predetermined value, or the like), the education comparing unit 111a analyzes history information of the purpose achievement user, and specifies a web page that the user has browsed in the past (hereinafter, also referred to as a "recommended web page").

Then, the usefulness judging unit 111b performs judgment processing of the usefulness in consideration of the recommended web page. More specifically, the usefulness judging unit 111b performs the judgment processing of the usefulness by raising a priority of interaction history information indicating a history of arbitrary exchange between the purpose achievement user and the recommended web page (for example, sets high weighting for the interaction history information, or the like).

Therefore, the usefulness judging apparatus 100 according to the modification can preferentially provide a web page that is the same as or similar to the recommended web page decided to be useful by the purpose achievement user, and can thus improve learning efficiency. Note that a content of the judgment processing of the usefulness considering the recommended web page is not limited to those described above.

### (3.3. Registration processing of information registered in indexed database in P2P database)

In the modification, information corresponding to the information registered in the indexed database 121 may be registered in the P2P database 221. The information corresponding to the information registered in the indexed database 121 is assumed to be, for example, a hash value of all or some of the information registered in the indexed database 121, but is not limited thereto.

More specifically, the registration control unit 113 of the usefulness judging apparatus 100 calculates the hash value of all or some of the information registered in the indexed database 121 at a predetermined timing, generate registration request information for requesting registration of the hash value in the P2P database 221, and transmits the registration request information to the node apparatus 200. Therefore, the hash value is registered in the P2P database 221. Therefore, it is possible to prevent tampering of the information registered in the indexed database 121.

Then, the judging unit 111 of the usefulness judging apparatus 100 may confirm that the tampering has not been performed by calculating the hash value in a manner similar to that described above and comparing the hash value with the latest hash value registered in the P2P database 221, at the time of performing the judgment processing of the usefulness. Note that a calculation timing of the hash value is not particularly limited. Furthermore, the information itself registered in the indexed database 121 may be registered in the P2P database 221.

### (3.4. Judgment processing of usefulness by P2P database program)

Hereinabove, the judging unit 111 (including the education comparing unit 111a and the usefulness judging unit 111b) of the usefulness judging apparatus 100 has performed the judgment processing of the usefulness. Here, in the modification, the usefulness judging apparatus 100 also functions as the node apparatus 200 (in other words, the usefulness judging apparatus 100 holds the P2P database 221) by participating in the P2P network 400, and the P2P database program 222 provided in the P2P database 221 may perform the judgment processing of the usefulness.

In other words, the P2P database program 222 may perform acquisition of the purpose information and the similar user information from the P2P database 221, acquisition of the comparison cohort from the indexed database 121, and judgment of the usefulness of the original URLs based on the comparison cohort and the purpose information.

Therefore, the judgment processing of the usefulness can be automated by the P2P database program 222. Furthermore, the P2P database program 222 has tamper resistance, and can thus prevent tampering of the information (for example, the purpose information, the similar user information, the comparison cohort, and the like) output by a series of processing. Note that the user apparatus 300 rather than the usefulness judging apparatus 100 may hold the P2P database 221 and perform the judgment processing of the usefulness using the P2P database program 222, by participating in the P2P network 400.

### (3.5. Application to system other than learning system)

As described above, the present disclosure may be applied to any system other than the learning system. Therefore, a case where the present disclosure is applied to a sales promotion system will hereinafter be described as an example.

For example, it is assumed that the usefulness judging apparatus 100 according to the modification is an information processing apparatus that provides information for promoting sales of an arbitrary product or service and the user apparatus 300 according to the modification is an information processing apparatus (for example, a dedicated terminal provided from a store, a personal terminal owned by a user, or the like) that is used by a sales target person of the product or the like. Then, in the modification, it is assumed that the purpose information is not acquired using the search keyword (or the web page information), and is set in advance by a seller. For example, it is assumed that information (for example, a product name, a kind of product, or the like) regarding a product or a service, which is a target to be sold, is set in the purpose information. A method of acquiring the similar user information and the comparison cohort and a content of the judgment processing of the usefulness are similar to those in the embodiment described above.

According to the modification, the usefulness judging apparatus 100 can provide a more useful web page or the like to the sales target person in order to sell an arbitrary product or the like. More specifically, the usefulness judging apparatus 100 can provide a web page or the like more useful for sales promotion to the sales target person, and can thus improve sales efficiency.

Similarly, the present disclosure can be applied to an arbitrary system to provide more useful information to a user in order to achieve an arbitrary purpose.

### <4. Hardware Configuration Example>

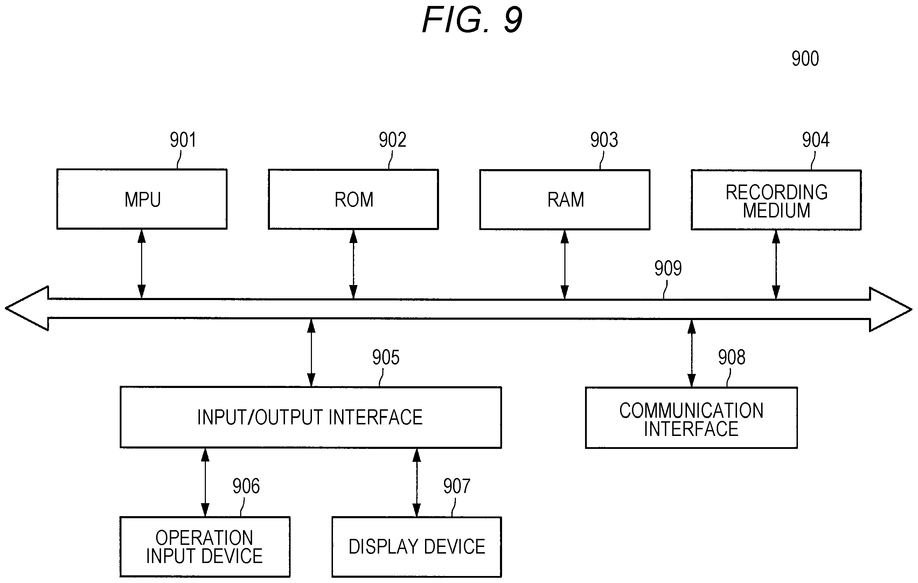

The modification of the present disclosure has been described hereinabove. Next, a hardware configuration of each apparatus will be described with reference to Fig. 9.

Fig. 9 is a block diagram showing an example of a hardware configuration of the usefulness judging apparatus 100, the node apparatus 200, or the user apparatus 300. The usefulness judging apparatus 100, the node apparatus 200, or the user apparatus 300 can be embodied by an information processing apparatus 900 shown in Fig. 9.

The information processing apparatus 900 includes, for example, an MPU 901, a ROM 902, a RAM 903, a recording medium 904, an input/output interface 905, an operation input device 906, a display device 907, and a communication interface 908. Furthermore, the information processing apparatus 900 connects each component by a bus 909 as a data transmission path, for example.

The MPU 901 includes, for example, one or two or more processors or various processing circuits including an arithmetic circuit such as an MPU or the like, and functions as the control unit 110 of the usefulness judging apparatus 100, the control unit 210 of the node apparatus 200, or the control unit 310 of the user apparatus 300. Note that the control unit 110 of the usefulness judging apparatus 100, the control unit 210 of the node apparatus 200, or the control unit 310 of the user apparatus 300 may include a dedicated (or general-purpose) circuit (for example, a processor or the like separate from the MPU 901) capable of realizing the various types of processing described above.

The ROM 902 stores control data or the like such as programs, operation parameters, or the like used by the MPU 901. The RAM 903 temporarily stores, for example, programs or the like executed by the MPU 901.

The recording medium 904 functions as the storage unit 120 of the usefulness judging apparatus 100, the storage unit 220 of the node apparatus 200, or the storage unit 340 of the user apparatus 300, and stores data, various programs, or the like regarding information processing according to the present embodiment, such as, for example, the search keyword (or the web page information), the learning user ID, the original URLs, the purpose information, the similar user information, the comparison cohort, the various history information, the interaction history information, or the like. Here, examples of the recording medium 904 can include a magnetic recording medium such as a hard disk or the like and a non-volatile memory such as a flash memory or the like. Furthermore, the recording medium 904 may be detachable from the information processing apparatus 900.

The input/output interface 905 connects, for example, the operation input device 906 or the display device 907. Here, examples of the input/output interface 905 can include a universal serial bus (USB) terminal, a digital visual interface (DVI) terminal, a high-definition multimedia interface (HDMI) (registered trademark) terminal, various processing circuits, and the like.

Furthermore, the operation input device 906 is provided, for example, on the information processing apparatus 900, and is connected to the input/output interface 905 inside the information processing apparatus 900. Examples of the operation input device 906 can include a keyboard, a mouse, a keypad, a touch panel, a microphone, an operation button, a rotary selector such as a direction key, a jog dial, or the like, or a combination thereof. The operation input device 906 functions as the input unit 320 of the user apparatus 300.

Furthermore, the display device 907 is provided, for example, on the information processing apparatus 900, and is connected to the input/output interface 905 inside the information processing apparatus 900. Examples of the display device 907 can include a liquid crystal display, an organic electro-luminescence (EL) display, or the like. The display device 907 functions as the output unit 330 of the user apparatus 300.

Note that it goes without saying that the input/output interface 905 can also be connected to an external device such as an external operation input device, an external display device, or the like of the information processing apparatus 900. Furthermore, the display device 907 may be a device capable of display and user operation, such as, for example, a touch panel or the like.

The communication interface 908 is a communication means that is included in the information processing apparatus 900, and functions as the communication unit 130 of the usefulness judging apparatus 100, the communication unit 230 of the node apparatus 200, or the communication unit 350 of the user apparatus 300. Furthermore, the communication interface 908 may have a function of performing wireless or wired communication with an arbitrary external apparatus such as, for example, a server or the like through an arbitrary network (or directly). Here, examples of the communication interface 908 can include a communication antenna and a radio frequency (RF) circuit (wireless communication), an IEEE802.15.1 port and a transmission/reception circuit (wireless communication), an IEEE802.11 port and a transmission/reception circuit (wireless communication), a local area network (LAN) terminal and a transmission/reception circuit (wired communication), or the like.

Note that the hardware configuration of the information processing apparatus 900 is not limited to the configuration shown in Fig. 9. For example, the information processing apparatus 900 may not include the communication interface 908 in a case where the information processing apparatus 900 performs communication through an external communication device to which the information processing apparatus 900 is connected. Furthermore, the communication interface 908 may be a configuration that can perform communication in a plurality of communication manners Furthermore, the information processing apparatus 900 may not include, for example, the operation input device 906, the display device 907, or the like. Furthermore, for example, some or all of the configurations shown in Fig. 9 may be realized by one or more integrated circuits (ICs).

### <5. Summary>

As described above, the information processing system according to the present disclosure acquires the information regarding the usefulness that other users similar to a user have felt for arbitrary information with respect to any one of the information (including the information regarding the purpose of the learning) regarding the arbitrary purpose mainly for the user or the history information of the user, registered in the P2P database 221, and evaluates usefulness of the arbitrary information on the basis of the information regarding the usefulness.

Therefore, in a case where the present disclosure is applied to a learning system, the information processing system (learning system) according to the present disclosure can shorten a time required for the user to search for information useful for learning, and can thus improve learning efficiency. Furthermore, the information processing system according to the present disclosure can prevent the evaluation of the usefulness from being illegally operated by using the information registered in the P2P database 221 for processing.

Hereinabove, the preferred embodiments of the present disclosure have been described in detail with reference to the accompanying drawings, but the technical scope of the present disclosure is not limited to such embodiments. It will be apparent to those skilled in the art of the present disclosure that various modifications or alterations can be conceived within the scope of the technical idea described in the claims, and it is naturally understood that these modifications or alterations also fall within the technical scope of the present disclosure.

Furthermore, the effects described in the present specification are only illustrative or exemplary rather than being restrictive. That is, the technology according to the present disclosure can accomplish other effects apparent to those skilled in the art from the description of the present specification, in addition to or instead of the effects described above.

Note that the following configurations also fall within the technical scope of the present disclosure.
(1) An information processing apparatus including:
   an acquiring unit that acquires information regarding usefulness that other users similar to a user have felt for arbitrary information with respect to any one of information regarding an arbitrary purpose mainly for the user or history information of the user, registered in a P2P database; and
   a control unit that performs evaluation of the arbitrary information on the basis of the information regarding the usefulness.
(2) The information processing apparatus according to the above (1), in which
   the information regarding the arbitrary purpose is specified on the basis of a keyword used for a search by the user or information browsed by the user.
(3) The information processing apparatus according to the above (2), in which
   the arbitrary information is a URL included in a result of the search or a web page corresponding to the URL, or link information included in the information browsed by the user or a web page corresponding to the link information.
(4) The information processing apparatus according to any one of the above (1) to (3), in which
   the history information includes learning history information, job history information, behavior history information, or purchase history information.
(5) The information processing apparatus according to any one of the above (1) to (4), in which
   the information regarding the usefulness is information indicating a history of arbitrary exchange between the other users and the arbitrary information.
(6) The information processing apparatus according to the above (5), in which
   the information regarding the usefulness includes a total browsing time of the arbitrary information, information indicating a history of performance of copying, pasting, printing, or sharing of the arbitrary information, information indicating a history of performance of "Like!", "+1", "retweet", "good/bad evaluation", "useful/not useful", or "5-level evaluation" on the arbitrary information, information indicating a history of contribution of a comment to the arbitrary information, or information indicating a history of registration of the arbitrary information in a "bookmark".
(7) The information processing apparatus according to any one of the above (1) to (6), in which
   the control unit controls provision of the arbitrary information to the user on the basis of a result of the evaluation.
(8) The information processing apparatus according to the above (7), in which
   the control unit controls display order, a display size, or a display color of the arbitrary information on the basis of the result of the evaluation, or causes the result of the evaluation to be displayed together with the arbitrary information.
(9) The information processing apparatus according to any one of the above (1) to (8), in which
   the information regarding the arbitrary purpose is information regarding a purpose of learning by the user.
(10) The information processing apparatus according to any one of the above (1) to (9), in which
   the control unit performs the evaluation by increasing a priority of the information regarding the usefulness that the other users who have achieved the arbitrary purpose have felt for the arbitrary information.
(11) The information processing apparatus according to any one of the above (1) to (10), in which
   the information regarding the usefulness or information corresponding to the information regarding the usefulness is registered in the P2P database.
(12) The information processing apparatus according to any one of the above (1) to (11), in which
   the control unit performs the evaluation using a predetermined program provided in the P2P database and executed on the P2P database.
(13) The information processing apparatus according to any one of the above (1) to (12), in which
   the P2P database is blockchain data.
(14) An information processing method executed by a computer, including:
   acquiring information regarding usefulness that other users similar to a user have felt for arbitrary information with respect to any one of information regarding an arbitrary purpose mainly for the user or history information of the user, registered in a P2P database; and
   performing evaluation of the arbitrary information on the basis of the information regarding the usefulness.
(15) A program for causing a computer to realize:
   acquiring information regarding usefulness that other users similar to a user have felt for arbitrary information with respect to any one of information regarding an arbitrary purpose mainly for the user or history information of the user, registered in a P2P database; and
   performing evaluation of the arbitrary information on the basis of the information regarding the usefulness.

### REFERENCE SIGNS LIST

- 100: Usefulness judging apparatus
- 110: Control unit
- 111: Judging unit
- 111a: Education comparing unit
- 111b: Usefulness judging unit
- 112: Provision control unit
- 113: Registration control unit
- 120: Storage unit
- 121: Indexed database
- 130: Communication unit
- 200: Node apparatus
- 210: Control unit
- 211: Acquiring unit
- 212: Registration control unit
- 220: Storage unit
- 221: P2P database
- 222: P2P database program
- 230: Communication unit
- 300: User apparatus
- 310: Control unit
- 320: Input unit
- 330: Output unit
- 340: Storage unit
- 350: Communication unit
- 400: P2P network
- 500: Network

## Claims

1. An information processing apparatus comprising:
an acquiring unit that acquires information regarding usefulness that other users similar to a user have felt for arbitrary information with respect to any one of information regarding an arbitrary purpose mainly for the user or history information of the user, registered in a P2P database; and
a control unit that performs evaluation of the arbitrary information on a basis of the information regarding the usefulness.

2. The information processing apparatus according to claim 1, wherein
the information regarding the arbitrary purpose is specified on a basis of a keyword used for a search by the user or information browsed by the user.

3. The information processing apparatus according to claim 2, wherein
the arbitrary information is a URL included in a result of the search or a web page corresponding to the URL, or link information included in the information browsed by the user or a web page corresponding to the link information.

4. The information processing apparatus according to claim 1, wherein
the history information includes learning history information, job history information, behavior history information, or purchase history information.

5. The information processing apparatus according to claim 1, wherein
the information regarding the usefulness is information indicating a history of arbitrary exchange between the other users and the arbitrary information.

6. The information processing apparatus according to claim 5, wherein
the information regarding the usefulness includes a total browsing time of the arbitrary information, information indicating a history of performance of copying, pasting, printing, or sharing of the arbitrary information, information indicating a history of performance of "Like!", "+1", "retweet", "good/bad evaluation", "useful/not useful", or "5-level evaluation" on the arbitrary information, information indicating a history of contribution of a comment to the arbitrary information, or information indicating a history of registration of the arbitrary information in a "bookmark".

7. The information processing apparatus according to claim 1, wherein
the control unit controls provision of the arbitrary information to the user on a basis of a result of the evaluation.

8. The information processing apparatus according to claim 7, wherein
the control unit controls display order, a display size, or a display color of the arbitrary information on a basis of the result of the evaluation, or causes the result of the evaluation to be displayed together with the arbitrary information.

9. The information processing apparatus according to claim 1, wherein
the information regarding the arbitrary purpose is information regarding a purpose of learning by the user.

10. The information processing apparatus according to claim 1, wherein
the control unit performs the evaluation by increasing a priority of the information regarding the usefulness that the other users who have achieved the arbitrary purpose have felt for the arbitrary information.

11. The information processing apparatus according to claim 1, wherein
the information regarding the usefulness or information corresponding to the information regarding the usefulness is registered in the P2P database.

12. The information processing apparatus according to claim 1, wherein
the control unit performs the evaluation using a predetermined program provided in the P2P database and executed on the P2P database.

13. The information processing apparatus according to claim 1, wherein
the P2P database is blockchain data.

14. An information processing method executed by a computer, comprising:
acquiring information regarding usefulness that other users similar to a user have felt for arbitrary information with respect to any one of information regarding an arbitrary purpose mainly for the user or history information of the user, registered in a P2P database; and
performing evaluation of the arbitrary information on a basis of the information regarding the usefulness.

15. A program for causing a computer to realize:
acquiring information regarding usefulness that other users similar to a user have felt for arbitrary information with respect to any one of information regarding an arbitrary purpose mainly for the user or history information of the user, registered in a P2P database; and
performing evaluation of the arbitrary information on a basis of the information regarding the usefulness.
